(19) Europäisches Patentamt | European Patent Office | Office européen des brevets

(11) **EP 4 352 111 B1**

(12) **FASCICULE DE BREVET EUROPEEN**


(45) Date de publication et mention de la délivrance du brevet:
**30.04.2025 Bulletin 2025/18**

(21) Numéro de dépôt: **22735210.1**

(22) Date de dépôt: **10.06.2022**

(51) Classification Internationale des Brevets (IPC):
***C08B 30/14*** (2006.01) ***A23L 29/212*** (2016.01)
***C08L 3/02*** (2006.01)

(52) Classification Coopérative des Brevets (CPC):
**C08B 30/14; A23L 29/212; C08L 3/02**

(86) Numéro de dépôt international:
**PCT/FR2022/051109**

(87) Numéro de publication internationale:
**WO 2022/258934 (15.12.2022 Gazette 2022/50)**


(54) **PROCEDE DE FABRICATION DE MELANGES GELATINISES D'AMIDONS THERMIQUEMENT MODIFIES**

VERFAHREN ZUR HERSTELLUNG VON GELATINIERTEN MISCHUNGEN VON THERMISCH MODIFIZIERTEN STÄRKEN

METHOD FOR MANUFACTURING GELATINISED BLENDS OF THERMALLY MODIFIED STARCHES


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2021 FR 2106121**

(43) Date de publication de la demande:
**17.04.2024 Bulletin 2024/16**



(73) Titulaire: **ROQUETTE FRERES**
**62136 Lestrem (FR)**

(72) Inventeur: **BOCK, Solène**
**59130 LAMBERSART (FR)**

(74) Mandataire: **Plasseraud IP**
**104 Rue de Richelieu**
**CS92104**
**75080 Paris Cedex 02 (FR)**



(56) Documents cités:
**WO-A1-00/73353 WO-A1-96/03891**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention se rapporte à un procédé de production d'un mélange gélatinisé d'au moins deux amidons thermiquement modifiés, dans lequel les amidons sont des amidons d'origines botaniques distinctes, ce procédé consistant à mélanger lesdits amidons d'origines botaniques distinctes avant de réaliser le traitement thermique proprement dit, puis à gélatiniser le mélange thermiquement modifié ainsi obtenu.
Plus particulièrement, l'invention est relative à un procédé de production d'un mélange gélatinisé de fécule de pomme de terre et d'amidon de maïs waxy thermiquement modifiés.
De tels mélanges d'au moins deux amidons thermiquement modifiés permettent :

- de renforcer leurs propriétés de viscosité, tout en conservant les propriétés texturantes exprimées par e mélange des amidons thermiquement modifiés préparés à partir d'un amidon issu d'une seule origine botanique, et
- d'améliorer leurs propriétés de solubilité.

De tels amidons thermiquement modifiés trouvent alors une utilisation comme agents épaississants et texturants dans de nombreuses applications alimentaires, principalement dans les soupes instantanées, sauces, vinaigrettes, desserts, produits laitiers et les préparations pour boulangerie.

## Contexte de l'invention

Synthétisé par voie biochimique, source d'hydrates de carbone, l'amidon est l'une des matières organiques les plus répandues du monde végétal, où il constitue la réserve nutritionnelle des organismes.
Depuis toujours, les amidons sont utilisés dans l'industrie alimentaire, non seulement comme ingrédient nutritif mais également pour leurs propriétés technologiques, comme agent épaississant, liant, stabilisant ou gélifiant.
Par exemple, les amidons natifs sont utilisés dans les préparations nécessitant une cuisson. L'amidon de maïs, notamment, est la base des « poudres à flan ».
Comme il est riche en amylose (autour de 25%) il rétrograde et donc gélifie fortement. Il permet d'obtenir des flans fermes après cuissons et refroidissement.
Il convient également pour les crèmes pâtissières.
Mais celles-ci ne peuvent pas entrer dans les pâtisseries destinées à être congelées car, à la décongélation, le phénomène de synérèse, qui se traduit par une expulsion d'eau, détruit la texture de la crème.
Ainsi, à l'état natif, l'amidon est d'application limitée en raison de la synérèse, mais également en raison de :

- sa faible résistance aux contraintes de cisaillement et aux traitements thermiques,
- sa rétrogradation élevée,
- sa faible processabilité et
- sa faible solubilité dans des solvants organiques communs.

De ce fait, pour répondre aux besoins technologiques exigeants d'aujourd'hui, les propriétés de l'amidon doivent être optimisées par diverses méthodes dites de « modification ».
Ces principales modifications visent alors à adapter l'amidon aux contraintes technologiques résultant de la cuisson, mais aussi de la congélation/décongélation, de l'appertisation ou de la stérilisation, et à le rendre compatible avec une alimentation moderne (micro-ondes, préparations instantanées, "hautes températures"...).
La modification de l'amidon vise alors à corriger un ou certains des défauts mentionnés ci-avant, améliorer ainsi sa polyvalence et satisfaire la demande des consommateurs.
Les techniques de modification de l'amidon ont été globalement classées en quatre catégories : physiques, chimiques, enzymatiques et génétiques, la finalité étant de produire divers dérivés avec des propriétés physicochimiques optimisées.
Les modifications chimiques et physiques sont celles le plus souvent mises en œuvre.
Le traitement chimique consiste à introduire des groupes fonctionnels dans l'amidon, ce qui altère remarquablement ses propriétés physico-chimiques. De telles modifications des amidons natifs granulaires altèrent en effet profondément le comportement en gélatinisation, collage et rétrogradation.
Généralement, ces modifications sont réalisées par dérivatisation chimique, comme l'estérification, l'éthérification, la réticulation ou le greffage.
Cependant, les modifications chimiques sont moins recherchées par le consommateur dans les applications alimentaires (également pour des raisons d'environnement), même si certaines modifications sont considérées comme sûres.
Des modifications physiques variées sont de ce fait proposées, par exemple :

- le traitement par la chaleur humide (terme anglosaxon de *« Heat Moisture Treatment »* ou HMT), consistant à traiter l'amidon à des niveaux d'humidité contrôlée (22-27 %) et à haute température, pendant 16 heures, afin d'altérer la structure et les propriétés physicochimiques de l'amidon ;
- la « recuite » (terme anglosaxon d' « *annealing* »), consistant à traiter l'amidon en excès d'eau, à des températures en-deçà de la température de gélatinisation, afin d'approcher la température de transition vitreuse ;
- le traitement à ultra haute pression (terme anglosaxon de « *High Pressure Processing* » ou HPP), par lequel on hydrate les régions amorphes du granule d'amidon, ce qui conduit à une distorsion des parties cristallines du granule et favorise l'accessibilité desdites régions cristallines à l'eau ;
- le traitement au plasma de décharge luminescente, qui génère, à température ambiante, des électrons à haute énergie et d'autres espèces hautement actives. Appliqués à l'amidon, ces espèces actives excitent les groupes chimiques de l'amidon et provoquent une réticulation importante des macromolécules ;
- le traitement de pression osmotique (en anglais « *Osmotic Pressure Treatment* », ayant pour acronyme anglosaxon « OPT »), réalisé en présence de solutions à haute teneur en sels. L'amidon est suspendu dans du sulfate de sodium afin de produire une suspension uniforme.L'amidon passe du type B au type A après traitement, en acquérant ainsi une température de gélatinisation qui augmente de manière significative ;
- le traitement par « inhibition thermique ». En toute généralité, l'inhibition thermique s'entend de la déshydratation d'un amidon jusqu'à atteindre l'état anhydre ou substantiellement anhydre (i.e. < 1 % d'humidité), puis un traitement thermique à plus de 100°C pendant une période de temps suffisante pour « inhiber » l'amidon, en l'occurrence ici pour lui conférer des propriétés d'amidons réticulés. Il est par ailleurs nécessaire de placer l'amidon dans des conditions de pH au moins neutre à préférentiellement alcalin avant de procéder à l'étape de déshydratation poussée. Une alternative de traitement par « inhibition thermique » a été proposée en phase solvant, qui consiste à chauffer un amidon granulaire non prégélatinisé en milieu alcoolique, en présence d'une base et de sels, à une température de 120° à 200°C, pendant 5 minutes à 2 heures.

Quoi qu'il en soit, le processus d'inhibition thermique conduit alors à obtenir une pâte d'amidon présentant des propriétés de résistance accrue à la rupture de viscosité, et une texture non cohésive.

Le domaine technique auquel se rattache l'invention est celui du traitement par inhibition thermique de l'amidon, sans solvant hydro-alcoolique.

Dans ce domaine technique particulier, on peut citer plus particulièrement le brevet US 6.221.420 qui décrit un amidon thermiquement inhibé, obtenu par déshydratation puis traitement thermique.

Les principales étapes sont :

- la déshydratation de l'amidon à une teneur en eau inférieure à 1% réalisée à une température comprise entre 100 et 125°C, puis
- le traitement thermique de l'amidon sec ainsi obtenu, à environ 140°C, dans un lit fluidisé réactionnel, pendant une durée de l'ordre de 20 heures.

De manière préférentielle, avant l'étape de déshydratation de l'amidon, il est recommandé de procéder à une étape d'alcalinisation de l'amidon, permettant de porter le pH de la suspension d'amidon à une valeur comprise entre 7 et 10, de préférence comprise entre 8 et 10.

A ce stade, avant l'étape de déshydratation proprement dite qui précède l'étape d'inhibition, la teneur en eau de l'amidon (telle qu'exemplifiée) est alors comprise entre 8 et 10 %.

La demande de brevet US 2001/0017133 décrit un procédé similaire, dans lequel l'amidon est également déshydraté en dessous de 125°C avant que le processus d'inhibition ne soit démarré (à une température de plus de 100°C, préférentiellement comprise entre 120 et 180°C, plus préférentiellement comprise entre 140 et 160°C) pendant une durée jusqu'à 20 heures, préférentiellement comprise entre 3 heures 30 minutes et 4 heures 30 minutes.

Avant l'étape de déshydratation, l'étape d'alcalinisation classique conduit à une suspension d'amidon présentant une valeur de pH comprise entre 7,5 et 11,2, de préférence comprise entre 8 et 9,5, et une teneur en eau comprise entre 2 et 15 %.

Une variante a été proposée dans la demande de brevet WO 2014/042537, variante qui porte sur un chauffage d'un amidon ayant subi un traitement d'alcalinisation à des températures comprises entre 140 et 190°C, en veillant à ce que le procédé d'inhibition soit initié et conduit en présence d'eau en quantité suffisante, soit plus de 1% d'eau.

En d'autres termes, ce procédé recommande d'inhiber thermiquement un amidon préalablement alcalinisé sans procéder à une étape de déshydratation.

La préparation d'amidon ou l'amidon sont ainsi amenés à un pH compris entre 9,1 et 11,2, préférentiellement à une valeur de l'ordre de 10, et l'humidité est ajustée entre 2 et 22 %, préférentiellement entre 5 et 10%.

L'inhibition thermique est réalisée ensuite directement sur cette poudre ou cet amidon, à une température comprise entre 140 et 190°C, préférentiellement entre 140 et 180°C, pendant une durée de 30 minutes.

La société Demanderesse a développé, quant à elle, son propre procédé de préparation d'amidons modifiés thermiquement, procédé décrit dans sa demande WO 2019/122749, consistant à :

(i) préparer un lait d'amidon présentant une matière sèche comprise entre 30 et 40 %, de préférence entre 35 et 37 % en poids,
(ii) ajouter un agent alcalin de manière à obtenir une conductivité finale comprise entre 0,7 et 2,5 mS/cm,
(iii) assurer un temps de contact compris entre 0,5 et 5 heures,
(iv) filtrer et sécher le lait d'amidon,
(v) chauffer ledit amidon séché de manière à le porter à une température de plus de 180°C pendant un temps de séjour compris entre 12 et 35 minutes.

L'avantage technologique est indéniable. Il permet non seulement de réduire considérablement le temps de réaction, mais permet en outre de traiter les amidons de toutes sources botaniques. Cependant, même si l'on constate que le pouvoir texturant de ces produits est satisfaisant, on peut noter que les propriétés de viscosité développées par les amidons thermiquement modifiés par cette technologie peuvent être encore améliorées.
Dans l'état de l'art, il est présenté différentes alternatives pour améliorer les propriétés technologiques des amidons inhibés thermiques (ou modifiés thermiquement).
Une première alternative consiste à réaliser des mélanges d'amidons avec d'autres hydrates de carbone (oligosaccharides, cellulose, voir même d'autres amidons natifs ou modifiés) avant ou après le traitement thermique pour améliorer les propriétés de résistance (texture et/ou viscosité).
C'est ainsi que dans le brevet EP 1.102.792 il est proposé de doper l'amidon en présence d'oligosaccharides présentant de 1 à 20 unités de sucres.
Sous certaines conditions de mise en œuvre, le mélange d'amidon et d'oligosaccharides développe alors une meilleure stabilité au stockage à froid.
Cependant, pour certaines applications alimentaires, il doit être ajouté de lourdes étapes de purification permettant de retirer les oligosaccharides de l'amidon après traitement thermique.
Dans le brevet EP 2.251.358, il est préféré de mettre en œuvre un mélange pulvérulent d'amidon et d'hémicellulose soluble dans l'eau, dans des proportions particulières.
Le traitement thermique consiste quant à lui en un traitement à la chaleur humide à une température de 100 à 200°C.
Il est d'ailleurs préconisé une incorporation de carbonate de sodium (ou de composés alcalins similaires) avec de l'hémicellulose dans de l'amidon de tapioca, de riz gluant ou de maïs cireux.
Cependant, il est surtout recherché un procédé de modification de l'amidon de telle sorte que le gonflement et / ou la désintégration (par exemple, rupture) des granules d'amidon soient efficacement supprimés sans aucun traitement chimique.
Selon ce brevet, l'objectif n'est pas d'améliorer à proprement parler les propriétés technologiques de l'amidon ainsi thermiquement modifié, mais d'empêcher la gélatinisation de l'amidon pour la fabrication de crèmes pâtissières.
Il est également connu de réaliser des mélanges d'amidons pour optimiser leurs propriétés fonctionnelles, mais cela est réalisé par le mélange de variétés d'amidons thermiquement modifiés avec des amidons natifs comme décrit dans la demande internationale WO 2020/018061.
Cette demande internationale décrit en effet une composition amidonnée comprenant :

- Une fécule de pomme de terre traitée à l'humidité et à la chaleur (HMT) en une quantité variant entre 60 et 70 % en poids de la composition amidonnée totale et
- Une fécule de tapioca natif en quantité comprise entre 30 et 40 % en poids de la composition amidonnée totale.

Ou bien, s'il est procédé à des traitements thermiques des mélanges, il l'est surtout préconisé pour des mélanges d'amidons avec des agents liants. Comme par exemple il est décrit dans la demande de brevet EP 3.345.932, où il est choisi un amidon d'une origine botanique donnée, mélangé avec un amidon de la même origine botanique mais traité par voie enzymatique ou chimique.
Dans ce même esprit, la société Demanderesse a développé sa propre technologie, décrite dans une demande de brevet française FR 20 07801 déposée le 24/07/2020 et non encore publiée, consistant en un procédé de traitement thermique d'un mélange d'au moins deux amidons granulaires d'origines botaniques distinctes.
Selon cette demande, le procédé de préparation d'un mélange d'au moins deux amidons modifiés thermiquement, dans lequel les amidons sont des amidons granulaires d'origines botaniques distinctes, comprend les étapes consistant à :

(i) Préparer un lait d'amidon contenant au moins deux amidons d'origines botaniques distinctes, présentant une matière sèche totale comprise entre 30 et 40 %, de préférence entre 35 et 37 % en poids,
(ii) Ajouter un agent alcalin de manière à obtenir une conductivité finale sur la poudre remise en suspension à 20 % de matière sèche entre 0,5 et 5 mS/cm,
(iii) Assurer un temps de contact compris entre 0,5 et 5 heures,
(iv) Filtrer et sécher le lait d'amidon jusqu'à une humidité comprise entre 10,5 à 15 %, de manière à obtenir une poudre d'amidons présentant une conductivité entre 0,5 et 2,5 mS/cm et un pH compris entre 9 et 10,5,
(v) Chauffer ladite poudre d'amidons séchés de manière à la porter à une température de plus de 130°C de préférence entre 130 et 220°C, pendant un temps de séjour compris entre 10 minutes et 6 heures.

La société Demanderesse avait en effet trouvé qu'une des limitations principales des amidons thermiquement modifiés fabriqués à partir d'une seule source botanique est une viscosité développée légèrement plus faible que celle des amidons chimiquement modifiés du marché, nécessitant un surdosage en cas de remplacement dans le cadre d'une solution respectant le statut 100% naturel et « avec le moins de transformations chimiques possible » (en anglais « *clean label* »).

Cette nouvelle technologie partant de mélanges s'inscrivait donc comme une solution simple et performante.

Une seconde alternative pour améliorer les propriétés technologiques des amidons inhibés thermiques consiste à combiner plusieurs méthodes de traitements thermiques distinctes.

Alors que l'ensemble des procédés précédemment décrits visent à conserver la structure granulaire du ou des amidons traités de telle sorte à empêcher la gélatinisation de l'amidon, la technologie préconisée dans cette seconde alternative consiste au contraire à combiner gélatinisation et traitement thermique de l'amidon, ce qui conduira à augmenter la solubilité des produits obtenus.

En effet, les granules d'amidon natif sont insolubles dans l'eau froide. Cependant, lorsque les granules natifs sont dispersés dans l'eau et chauffés, ils s'hydratent et gonflent. Avec un chauffage continu, un cisaillement ou des conditions de pH extrême, les granules gélatinisés fragmentent et les molécules d'amidon sont dispersées dans l'eau, c'est-à-dire solubilisées. On parlera alors d'amidon prégélatinisé.

Par amidon « prégélatinisé » ou amidon « prégel », on entend ainsi un amidon obtenu par traitement de type gélatinisation hydrothermique d'amidons natifs ou d'amidons modifiés, notamment par cuisson à la vapeur, cuisson au cuiseur à jet (jet-cooker en anglais), cuisson au tambour ou cuisson au pétrin, à une température inférieure à la température de gélatinisation de l'amidon correspondant, puis séchage en amidonnerie sur un tambour sécheur ou dans une extrudeuse, rendant l'amidon soluble dans l'eau froide.

C'est ainsi que le brevet US 6.261.376 décrit ce traitement pour obtenir des amidons non granulaires prégélatinisés présentant les propriétés texturantes d'amidons non granulaires prégélatinisés chimiquement réticulés, et exempts de mauvais goûts.

Pour ce faire, ce brevet enseigne de réaliser la prégélatinisation sur de l'amidon ou des farines préalablement ou non inhibés thermiquement.

En d'autres termes, de manière indifférenciée, il est procédé à une inhibition thermique d'une variété d'amidon native, puis à sa prégélatinisation, ou alors, une variété d'amidon est d'abord prégélatinisé, puis inhibée thermiquement.

Ces procédés sont mis en œuvre sur toute source botanique d'amidon, toujours choisie unique et conduisent à s'assurer que les amidons ainsi traités présentent un haut degré d'inhibition et un haut pic de viscosité.

Aucune information n'est présentée dans ce document relative à la solubilité des produits obtenus, ni à la meilleure manière d'équilibrer leur solubilité et viscosité, tout en maintenant un niveau de résistance équivalent voire supérieur aux amidons stabilisés par voie chimique.

WO 96/03891 A1 divulgue un procédé de préparation d'un amidon gélatinisé et modifié thermiquement, dans lequel la modification thermique est effectuée par déshydratation en conditions alcalines et traitement thermique, la gélatinisation peut précéder ou suivre la modification thermique, et l'amidon peut consister en un amidon singulier ou en un mélange d'amidons différents, par exemple ayant des origines botaniques distinctes. Dans le cas d'un mélange d'amidons, les amidons peuvent être modifiés thermiquement individuellement ou en même temps.

Il demeure donc un besoin non satisfait de disposer d'une nouvelle alternative à ces procédés de l'état de l'art, et la société demanderesse a trouvé que ce besoin est satisfait en choisissant de combiner sa technologie de production d'amidons thermiquement modifiés à partir d'un mélange d'au moins deux amidons d'origines botaniques distinctes et de gélatinisation du mélange d'amidons thermiquement modifiés ainsi obtenu.

L'ordre des étapes est donc contraire à ce qui était préconisé dans US 6.261.376, c'est-à-dire de choisir de mettre en œuvre l'étape de gélatinisation après avoir obtenu le mélange d'amidons thermiquement modifiés, et pas l'inverse. Ainsi, la présente invention requiert :

- de réaliser une première étape de traitement thermique de type inhibition thermique sur un mélange d'amidons de sources botaniques distinctes, suivie
- d'une seconde étape de prégélatinisation du mélange d'amidons ainsi thermiquement modifié.

## Description de l'invention

Selon un premier aspect de l'invention, le procédé de préparation d'un mélange gélatinisé d'au moins deux amidons modifiés thermiquement, dans lequel les amidons sont des amidons d'origines botaniques distinctes, comprend les étapes consistant à :

1. Préparer un lait d'amidon contenant au moins deux amidons d'origines botaniques distinctes,
2. Traiter le lait ainsi obtenu en conditions alcalines puis déshydratation et traitement thermique pendant un temps et à une température permettant d'obtenir un mélange d'amidons thermiquement modifiés,
3. Prégélatiniser ledit mélange en utilisant un procédé qui provoque une rupture de la structure granulaire des amidons.

De manière préférentielle, les deux premières étapes seront réalisées de la façon suivante :

(i) Préparer un lait d'amidon contenant au moins deux amidons d'origines botaniques distinctes, présentant une matière sèche totale comprise entre 30 et 40 %, de préférence entre 35 et 37 % en poids,
(ii) Ajouter un agent alcalin de manière à obtenir une conductivité finale sur la poudre remise en suspension à 20 % de matière sèche entre 0,5 et 5 mS/cm,
(iii) Assurer un temps de contact compris entre 0,5 et 5 heures,
(iv) Filtrer et sécher le lait d'amidon jusqu'à une humidité comprise entre 10,5 à 15 %, de manière à obtenir une poudre d'amidons présentant une conductivité entre 0,5 et 2,5 mS/cm et un pH compris entre 9 et 10,5,
(v) Chauffer ladite poudre d'amidons séchés de manière à la porter à une température de plus de 130°C de préférence entre 130 et 220°C, pendant un temps de séjour compris entre 10 minutes et 6 heures.

Les amidons à utiliser dans le procédé de l'invention peuvent être de toute origine, par exemple le maïs, le maïs waxy, l'amylomaïs, le blé, le blé waxy, le pois, la féverole, la pomme de terre, la pomme de terre waxy, le tapioca, le tapioca waxy, le riz, le konjac, etc.

De manière préférentielle, on choisira de mélanger une fécule de pomme de terre avec un amidon de maïs, plus particulièrement de l'amidon de maïs waxy (à haute teneur en amylopectine).

Selon un mode de réalisation particulier, le procédé selon l'invention concerne la préparation d'un mélange de deux amidons modifiés thermiquement, dans lequel les amidons sont des amidons granulaires d'origines botaniques distinctes, présents dans le mélange en quantités égales, formant ainsi un mélange 50/50 en masse.

Le procédé conforme à l'invention demande dans l'étape (i) la préparation d'un lait d'amidons d'au moins deux origines botaniques distinctes à une matière sèche totale comprise entre 30 et 40 %, de préférence entre 35 et 37 % en poids. Comme il sera exemplifié ci-après, la matière sèche est fixée à 36,5 % en poids.

L'étape (ii) suivante consiste alors à contrôler l'imprégnation alcaline des amidons mélangés.

L'agent alcalin est préférentiellement choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et l'hydroxyde de potassium, ou un mélange de deux ou plusieurs de ceux-ci, et plus préférentiellement encore le carbonate de sodium.

L'imprégnation alcaline au carbonate de sodium est réalisée en ajoutant l'agent alcalin par exemple sous forme poudre pour obtenir une conductivité finale sur la poudre remise en suspension à 20 % de matière sèche, comprise entre 0,5 et 5 mS/cm.

Dans l'étape (iii), il est assuré ensuite un temps de contact compris entre 0,5 et 5 heures, de préférence entre 0,5 et 1 heure.

Les consignes de conductivité, de pH et d'humidité de la poudre d'amidons mélangés avant traitement thermique (étape (iv)) sont les suivantes :

- Conductivité : comprise entre 0,5 et 2,5 mS/cm,
- pH : compris entre 9,5 et 10,5
- humidité : entre 10,5 et 15 %.

Dans un premier mode de réalisation du procédé selon l'invention, l'étape suivante de traitement thermique proprement dit dans l'étape (v) peut être réalisée dans des dispositifs de traitement thermique combinant les échanges de chaleur par conduction et par convection, dispositif de type turbosécheur, par exemple au moins un turbosécheur continu de type VOMM, qui permet ainsi, en fonction de la taille dudit VOMM, d'atteindre un temps de réaction très court, de l'ordre de quelques minutes, soit moins de 5 minutes par étage de traitement thermique.

Les consignes de température sont ensuite fixées à des valeurs de plus 190°C, de préférence comprise entre 200 et 210°C, pendant un temps de séjour compris entre 10 et 60 minutes, plus préférentiellement encore entre 15 et 35 minutes.

Le delta T, défini comme la différence de température entre la température de consigne et la température du produit en sortie du réacteur, est compris entre 17 et 27°C.

Dans un second mode de réalisation du procédé selon l'invention, le traitement thermique proprement dit peut-être réalisé dans des dispositifs de type « lit fluidisé réactionnel ».

Comme il est connu de l'homme du métier, ce dispositif est constitué d'un réacteur qui permet de mettre en suspension un solide divisé grâce à un gaz, en l'occurrence un mélange air/azote. La vitesse du gaz est réglée en fonction de la matière première.

La température de traitement thermique (température du produit) est entre 130 et 200°C avec un temps de réaction variant entre 30 min et 6 heures, préférentiellement entre 2 et 4 heures.

De manière préférentielle, l'étape 3) du procédé conforme à l'invention, qui consiste à prégélatiniser le mélange d'amidons modifiés thermiquement, utilise un procédé qui provoque une rupture de la structure granulaire des amidons.

La prégélatinisation est réalisée par tout moyen connu de l'homme du métier, par traitement de type gélatinisation hydrothermique, notamment par cuisson à la vapeur, cuisson au cuiseur à jet (en anglais jet-cooker), cuisson au tambour ou cuisson au pétrin, à une température inférieure à la température de gélatinisation de l'amidon correspondant, puis séchage en amidonnerie sur un tambour sécheur ou dans une extrudeuse, rendant l'amidon soluble dans l'eau froide.

La prégélatinisation est préférentiellement réalisée de la manière suivante :

(i) Remettre en suspension le mélange d'amidons modifiés thermiquement à une matière sèche comprise entre 25 et 35 %, de préférence de 30 % en poids,
(ii) Alimenter un tambour sécheur et chauffer le lait d'amidons à une température comprise entre 100 à 120°C, de préférence entre 108 à 110°C,
(iii) broyer la feuille obtenue de manière à obtenir une poudre présentant une granulométrie moyenne comprise entre 50 et 60 µm.

Le mélange gélatinisé d'amidons thermiquement modifiés selon l'invention seront avantageusement utilisés, en fonction de leurs propriétés respectives, en tant qu'agents épaississants et texturants dans de nombreuses applications alimentaires, principalement dans les soupes instantanées, sauces, vinaigrettes, desserts, produits laitiers et les préparations pour boulangerie.

Ainsi, selon un deuxième aspect, l'invention concerne un mélange gélatinisé d'au moins deux amidons modifiés thermiquement, dans lequel les amidons sont des amidons d'origines botaniques distinctes, ledit mélange étant susceptible d'être obtenu par un procédé de fabrication selon le premier aspect.

Ainsi, selon un troisième aspect, l'invention concerne l'utilisation d'un amidon modifié thermiquement produit par le procédé selon le premier aspect, en tant qu'agents épaississants et texturants dans des applications alimentaires, principalement dans les soupes instantanées, sauces, vinaigrettes, desserts, produits laitiers et les préparations pour boulangerie.

L'invention sera mieux comprise à l'aide des exemples qui suivent, lesquels se veulent illustratifs et non limitatifs.

## Exemples

### Matériel et méthodes

*Mesure de la conductivité*

La méthode mise en œuvre ici est adaptée de la Pharmacopée Européenne - édition officielle en vigueur - Conductivité (§ 2.2.38).

*Matériels :*

Conductivimètre électronique KNICK 703 équipé également de sa cellule de mesure et vérifié selon le mode opératoire décrit dans le manuel d'instructions qui s'y rapporte.

*Mode opératoire :*

On prépare une solution contenant 3 g d'échantillon et 97 g d'eau distillée présentant une résistivité supérieure à 500 000 ohms.cm.

On effectue la mesure, à 20°C, à l'aide du conductivimètre en se reportant au mode opératoire indiqué dans le manuel d'utilisation de l'appareil.

Les valeurs sont exprimées en micro Siemens/cm (µS/cm).

*Mesure de la viscosité d'une suspension d'amidon à l'aide du Rapid Viscosimeter Analyser (RVA)*

Cette mesure est réalisée dans des conditions de concentration déterminées et suivant un profil d'analyse température/temps adapté.

Le mode opératoire est le suivant :

- Introduire 4,30 g ± 0,01 g de glycérine, directement dans le bol du viscosimètre (Réf NEW 970028 - FOSS).
- Peser exactement, au mg, l'échantillon à tester à la balance de précision, directement dans le bol du viscosimètre.
- Homogénéiser l'ensemble avec une microspatule. Récupérer le maximum de produit à l'aide de la pale d'agitation.
- Dans un bécher de 50 ml, peser 6,00 g de solution d'acide citrique monohydraté (solution à 10 % en poids) et 20,00 g d'eau distillée. La pesée est effectuée sur une balance de précision.
- Verser le mélange eau / solution acide citrique préalablement pesé dans le mélange glycérine / échantillon et démarrer immédiatement la mesure.

Le profil d'analyse temps / température et vitesse dans le RVA est alors réalisé comme suit :

[Tableau 1]

| Temps hh:mm:ss | Température °C | Vitesse de rotation Tour/min (RPM) |
|---|---|---|
| 00:00:00 | 25 | 100 |
| 00:00:10 | 25 | 500 |
| 00:00:15 | 25 | 1000 |
| 00:00:30 | 25 | 160 |
| 00:10:00 | 25 | 160 |
| 00:18:00 | 90 | 160 |
| 00:21:00 | 90 | 160 |
| 00:29:00 | 30 | 160 |
| 00:34:00 | 30 | 160 |

Fin de test : 00:34:05 (hh:mm:ss)

Température initiale : 25°C ± 0,5°C

Intervalle d'acquisition des données : 2 secondes

Sensibilité : basse (low)

Les résultats des mesures sont donnés en RVU (unité utilisée pour exprimer la viscosité obtenue sur le RVA), sachant que 1 unité RVU = 12 cPoises (cP).

Pour rappel, 1 cP = 1 mPa.s.

Les résultats seront donc présentés en mPa.s.

*Mesure de la solubilité*

*Mode opératoire, pour mesure la solubilité d'un amidon natif :*

- Dans un bécher de 250 ml, introduire 200 ml d'eau distillée. Mettre sous agitation et ajouter 50 g de l'échantillon à analyser. Homogénéiser pendant 15 minutes et centrifuger 10 minutes à 4000 rpm.
- Prélever 50 ml du liquide surnageant. Les introduire dans un cristallisoir taré (préalablement séché pendant 1 heure dans une étuve à circulation d'air réglée à 103°C +/- 2°C).

- Placer à 60°C dans une autre étuve aérée permettant un séchage à 50 - 60°C, jusqu'à évaporation de l'eau.
- Mettre ensuite dans l'étuve à circulation d'air réglée à 103°C +/- 2°C pendant 1 heure.
- Placer dans un dessiccateur pour refroidir à température ambiante.
- Peser.

*Mode opératoire, pour mesure la solubilité d'un amidon gélatinisé :*

- Dans un bécher de 250 ml, introduire 200 ml d'eau distillée. Mettre sous agitation et ajouter 5 g de l'échantillon à analyser. Homogénéiser pendant 15 minutes et centrifuger 10 minutes à 4000 rpm.
- Prélever 25 ml du liquide surnageant. Les introduire dans un cristallisoir taré (préalablement séché pendant 1 heure dans une étuve à circulation d'air réglée à 103°C +/- 2°C).
- Placer à 60°C dans une autre étuve aérée permettant un séchage à 50 - 60°C, jusqu'à évaporation de l'eau.
- Mettre ensuite dans l'étuve à circulation d'air réglée à 103°C +/- 2°C pendant 1 heure.
- Placer dans un dessiccateur pour refroidir à température ambiante.
- Peser.

La teneur en matières solubles, exprimée en pourcentage en masse, est donnée par la formule :

$$= \frac{m \times 200 \times 1000}{25 \times P}$$

où

m = la masse en grammes, du résidu
P = la masse, en grammes, de la prise d'essai.

**Exemple 1** : **préparation d'un mélange d'amidon natif suivie d'une prégélatinisation sur tambour sécheur.**

- Préparer une suspension aqueuse 50/50 en % poids d'amidon de maïs waxy et de fécule de pomme de terre à 30% de matière sèche (MS),
- Alimenter le tambour du fabricant « Andritz Gouda » à une vitesse de rotation de 4 tr/min au démarrage et dont les cylindres sont chauffés vers 90°C par de la vapeur d'eau à 8.6 bars. Une feuille d'amidon solide est ainsi obtenue. Une tuyère est également utilisée pour chauffer le lait d'amidons vers 108-110°C .
- Augmenter la vitesse de rotation à 6 tr/min pour obtenir des bourbiers plus réguliers.
- Obtenir une feuille homogène à la sortie du tambour sécheur.

La feuille est ensuite broyée dans un broyeur à marteau du fabricant « Retsch » équipé d'une grille de 5 mm, à 1 500 tour/min, puis dans un broyeur ultra-fine de marque « Septu » réglé à 50 Hertz, à une vitesse de rotation de 3000 tour/min. Il en résulte une fine poudre jaunâtre. Le diamètre moyen en volume de cette poudre est de 68 μm.

Résultats : Tableau II

| Exp | Humidité % | pH à 3%MS | Conductivité à 3% μS | RVA | | | | Solubilité |
|---|---|---|---|---|---|---|---|---|
| | | | | V pic (mPa.s) | V24min (mPa.s) | Vmini (mPa.s) | T°C au Pic | % |
| TO | 6.9 | 6.5 | 45.2 | 204 | 39 | 34 | 42.2 | 88.7 |

**Exemple 2** : **préparation d'un mélange d'amidons thermiquement modifiés A en turbosécheur continu VOMM suivie d'une prégélatinisation sur tambour sécheur.**

*1) L'alcalinisation du mélange d'amidons est conduite selon les étapes suivantes :*

- Préparer une suspension aqueuse 50/50 en % poids d'amidon de maïs waxy et de fécule de pomme de terre à 36.5 % de matière sèche (MS) ;

- Ajouter du carbonate de sodium en poudre pour obtenir une conductivité finale sur la poudre remise en suspension à 20 % MS entre 0,5 et 1 mS/cm;
- Assurer un temps de contact de 2 h;
- Filtrer et sécher à une humidité d'équilibre de l'amidon entre 10-14 %

Il est tout à fait possible au lieu d'ajouter du carbonate de sodium en poudre, de l'ajouter sous forme de solution selon le protocole suivant :

- Préparer une solution aqueuse de carbonate de sodium à 30 % de concentration massique et chauffer vers 40-50°C pour favoriser la dissolution du carbonate ;
- Ajouter la solution de carbonate de sodium à 30 % de concentration massique de manière à obtenir une conductivité sur le lait comprise entre 2 et 4 mS/cm;
- Assurer un temps de contact de 30 min.

Cela permet de diminuer le temps de contact puisque le carbonate est déjà bien dissout en solution à 30%.

*2) Traitement thermique*

Le produit obtenu à l'étape précédente est traité thermiquement dans des turbosécheurs continus de type VOMM en série, dont la température de consigne est fixée à 210°C et configurés pour faire subir au produit un temps de séjour de 30 min, et de manière à ce que la différence de température entre la consigne et la température du produit en sortie du réacteur, qu'on appelle Delta T, soit d'une valeur de l'ordre de 21 °C.

Paramètres de process : Tableau III

| Exp | Conductivité sur produit après imprégnation remis à 20%MS en mS/cm | Humidité du produit avant traitement thermique | Delta T | T°C consigne | Temps de séjour min |
|---|---|---|---|---|---|
| A | 0.626 | 10 | 21 | 210 | 30 |

Les mesures de viscosité RVA sont réalisées et sont présentées dans le tableau ci-dessous.

Résultats : Tableau IV

| Exp | RVA Chute (mPa.s) | RVA Pic (mPa.s) |
|---|---|---|
| Base 50/50 maïs waxy /fécule de pomme de terre | 990 | 1169 |
| A | -158 | 577 |

*3) Neutralisation et lavage*

- Remise en suspension du mélange traité thermiquement à 36.5% de matière sèche dans l'eau.
- Neutralisation avec de l'acide chlorhydrique dilué à 18% pour obtenir un pH entre 5 et 7,5.
- Essorage et lavage à l'eau déminéralisée sur une essoreuse « Dorr Oliver » jusqu'à obtention d'une conductivité inférieure à 250 µS.

Le gâteau ainsi obtenu a une humidité entre 40 et 45 %.

*4) Prégelatinisation sur tambour sécheur*

- Remise en suspension du gâteau à 30%MS dans l'eau
- Alimentation du tambour du fabricant « Andritz Gouda » à une vitesse de rotation de 4 tr/min au démarrage et dont les cylindres sont chauffés vers 90°C par de la vapeur d'eau à 8.6 bars. Une feuille d'amidon solide est ainsi obtenue. Une tuyère est également utilisée pour chauffer le lait d'amidons vers 108-110°C .

- Augmentation de la vitesse de rotation à 6tr/min pour obtenir des bourbiers plus réguliers.
- Obtention d'une feuille homogène à la sortie du tambour sécheur.
- La feuille est ensuite broyée dans un broyeur à marteau du fabricant « Retsch » équipé d'une grille de 5 mm, à 1 500 tour/min, puis dans un broyeur ultra-fine de marque « Septu » réglé à 50 Hertz, à une vitesse de rotation de 3000 tour/min. Il en résulte une fine poudre jaunâtre. Le diamètre moyen en volume de cette poudre est de 55 μm.

Résultats : Tableau V

| exp | Humidité % | pH à 3%MS | Conductivité à 3% uS | RVA | | | | Solubilité % |
|---|---|---|---|---|---|---|---|---|
| | | | | V pic (mPa.s) | V24min (mPa.s) | Vmini (mPa.s) | T°C au Pic | |
| ATS | 4.9 | 7.2 | 142 | 553 | 184 | 204 | 81.7 | 32.1 |

Discussion des résultats :

Si l'on compare cette famille A de mélanges d'amidons thermiquement modifiés et prégélatinisés à l'exemple 1 et donc au mélange d'amidons uniquement prégélatinisé on remarque que la température au Pic est bien plus élevée pour le mélange thermiquement modifié et prégélatinisé que pour le mélange uniquement prégélatinisé. Ceci traduit bien un niveau de résistance améliorée pour la famille A par rapport au mélange natif prégélatinisé : il est nécessaire d'atteindre une température plus importante pour gonfler complètement le mélange d'amidon. Mais ceci se traduit aussi au niveau de la solubilité qui se retrouve alors diminuée.

**Exemple 3 : Préparation d'un mélange d'amidons thermiquement modifié B en turbosécheur continu VOMM suivie d'une prégélatinisation sur tambour sécheur.**

*1) L'alcalinisation du mélange d'amidons est conduite selon les étapes suivantes :*

- Préparer une suspension aqueuse 50/50 en % poids d'amidon de maïs waxy et de fécule de pomme de terre à 36.5 % de matière sèche (MS) ;
- Ajouter du carbonate de sodium en poudre pour obtenir une conductivité finale sur la poudre remise en suspension à 20 % MS entre 0,5 et 1 mS/cm;
- Assurer un temps de contact de 2 h;
- Filtrer et sécher à une humidité d'équilibre de l'amidon entre 10-14 %.

Il est tout à fait possible au lieu d'ajouter du carbonate de sodium en poudre, de l'ajouter sous forme de solution de la manière suivante:

- Préparer une solution aqueuse de carbonate de sodium à 30 % de concentration massique et chauffer vers 40-50°C pour favoriser la dissolution du carbonate ;
- Ajouter la solution de carbonate de sodium à 30 % de concentration massique de manière à obtenir une conductivité sur le lait comprise entre 2 et 4 mS/cm;
- Assurer un temps de contact de 30min

Cela permet de diminuer le temps de contact puisque le carbonate est déjà bien dissout en solution à 30%.

*2) Traitement thermique*

Le produit ainsi obtenu est traité thermiquement dans des turbosécheurs continus de type VOMM en série, dont la température de consigne est fixée à 210°C et configurés pour faire subir au produit un temps de séjour de 35 à 40 min, et de manière à ce que la différence de température entre la consigne et la température du produit en sortie du réacteur, qu'on appelle Delta T, soit d'une valeur de l'ordre de 24 à 25 °C.

Paramètres de process : Tableau VI

| Exp | Conductivité sur produit après imprégnation remis à 20%MS en mS/cm | Humidité du produit avant traitement thermique | Delta T | T°C consigne | Temps de séjour min |
|---|---|---|---|---|---|
| B-1 | 0.630 | 10 | 24 | 210 | 35 |

(suite)

| Exp | Conductivité sur produit après imprégnation remis à 20%MS en mS/cm | Humidité du produit avant traitement thermique | Delta T | T°C consigne | Temps de séjour min |
|---|---|---|---|---|---|
| B-2 | 0,595 | 10.1 | 25 | 210 | 40 |

Les mesures de viscosité RVA sont réalisées et sont présentées dans le tableau ci-dessous.

Résultats : Tableau VII

| Exp | RVA Chute (mPa.s) | RVA Pic (mPa.s) |
|---|---|---|
| Base 50/50 maïs waxy /fécule de pomme de terre | 990 | 1169 |
| B-1 | -386 | 648 |
| B-2 | -497 | 469 |

*3) Neutralisation et lavage*

- Remise en suspension des mélanges traités thermiquement à 36.5 % de matière sèche dans l'eau.
- Neutralisation avec de l'acide chlorhydrique dilué à 18 % pour obtenir un pH entre 5 et 7,5.
- Essorage et lavage à l'eau déminéralisée sur une essoreuse « Dorr Oliver » jusqu'à obtention d'une conductivité inférieure à 250 µS.
- Le gâteau ainsi obtenu a une humidité entre 46 et 50 %.

*4) Prégélatinisation sur tambour sécheur*

- Remise en suspension du gâteau à 30 %MS dans l'eau
- Alimentation du tambour du fabricant « Andritz Gouda » à une vitesse de rotation de 4 tr/min au démarrage et dont les cylindres sont chauffés vers 90°C par de la vapeur d'eau à 8.4 bars. Une feuille d'amidon solide est ainsi obtenue. Une tuyère est également utilisée pour chauffer le l'ait d'amidons vers 114-118°C .
- Augmentation de la vitesse de rotation à 5tr/min pour obtenir des bourbiers plus réguliers.
- Obtention d'une feuille homogène à la sortie du tambour sécheur.
- La feuille est ensuite broyée dans un broyeur à marteau du fabricant « Retsch » équipé d'une grille de 5 mm, à 1 500 tour/min, puis dans un broyeur ultra-fine de marque « Septu » réglé à 50 Hertz, à une vitesse de rotation de 3000 tour/min. Il en résulte une fine poudre jaunâtre. Le diamètre moyen en volume de cette poudre est de 54 µm.

Résultats : Tableau VIII

| exp | Humidité % | pH à 3%MS | Conductivité à 3% uS | RVA | | | | Solubilité % |
|---|---|---|---|---|---|---|---|---|
| | | | | V pic (mPa.s) | V24min (mPa.s) | Vmini (mPa.s) | T°C au Pic | |
| B-1 TS | 5.05 | 7.3 | 130 | 404 | 218 | 222 | 88.85 | 30.6 |
| B-2 TS | 4.47 | 7,5 | 250 | 409 | 192 | 188 | 86.75 | 30 |

Discussion des résultats :

Si l'on compare cette famille B de mélanges d'amidons thermiquement modifiés et prégélatinisés à l'exemple 1 et 2 (Famille A), on remarque que la température au Pic est bien plus élevée pour la famille B que pour le mélange uniquement prégélatinise et également plus élevée que la famille A. Ceci traduit bien un niveau de résistance améliorée de la famille B par rapport à la famille A et par rapport au mélange natif prégélatinisé : il est nécessaire d'atteindre une température plus importante pour gonfler complètement le mélange d'amidon. Mais ceci se traduit aussi au niveau de la solubilité qui se retrouve alors encore un peu diminuée.

**Exemple 4 : préparation d'un mélange d'amidons thermiquement modifié C en turbosécheur continu VOMM suivi d'une prégélatinisation sur tambour sécheur**

*1) L'alcalinisation du mélange d'amidons est conduite selon les étapes suivantes :*

- Préparer une suspension aqueuse 50/50 en % poids d'amidon de maïs waxy et de fécule de pomme de terre à 36.5 % de matière sèche (MS) ;
- Ajouter du carbonate de sodium en poudre pour obtenir une conductivité finale sur la poudre remise en suspension à 20 % MS entre 0,5 et 1 mS/cm;
- Assurer un temps de contact de 2 h;
- Filtrer et sécher à une humidité d'équilibre de l'amidon entre 10-14 %

Il est tout à fait possible au lieu d'ajouter du carbonate de sodium en poudre, de l'ajouter sous forme de solution de la manière suivante :

- Préparer une solution aqueuse de carbonate de sodium à 30 % de concentration massique et chauffer vers 40-50°C pour favoriser la dissolution du carbonate ;
- Ajouter la solution de carbonate de sodium à 30 % de concentration massique de manière à obtenir une conductivité sur le lait comprise entre 2 et 4 mS/cm;
- Assurer un temps de contact de 30 min.

Cela permet de diminuer le temps de contact puisque le carbonate est déjà bien dissout en solution à 30 %.

*2) Traitement thermique*

Le produit ainsi obtenu est traité thermiquement dans des turbosécheurs continus de type VOMM en série, dont la température de consigne est fixée à 210°C et configurés pour faire subir au produit un temps de séjour de 45 à 50 min, et de manière à ce que la différence de température entre la consigne et la température du produit en sortie du réacteur, qu'on appelle Delta T, soit d'une valeur de l'ordre de 22 à 25 °C.

Paramètres de process : Tableau IX

| Exp | Conductivité sur produit après imprégnation remis à 20%MS en mS/cm | Humidité du produit avant traitement thermique | Delta T | T°C consigne | Temps de séjour min |
|---|---|---|---|---|---|
| C | 0.605 | 10.3 | 25 | 210 | 45 |

Les mesures de viscosité RVA sont réalisées et sont présentées dans le tableau ci-dessous.

Résultats : Tableau X

| Exp | RVA Chute (mPa.s) | RVA Pic (mPa.s) |
|---|---|---|
| Base 50/50 maïs waxy /fécule de pomme de terre | 990 | 1169 |
| C | -504 | 345 |

*3) Neutralisation et lavage*

- Remise en suspension du mélange traité thermiquement à 36.5% de matière sèche dans l'eau.
- Neutralisation avec de l'acide chlorhydrique dilué à 18% pour obtenir un pH entre 5 et 7,5.
- Essorage et lavage à l'eau déminéralisée sur une essoreuse « Dorr Oliver » jusqu'à obtention d'une conductivité inférieure à 250 µS.
- Le gâteau ainsi obtenu a une humidité entre 50 et 58 %.

4) Pregelatinisation sur tambour sécheur

- Remise en suspension du gâteau à 30%MS dans l'eau
- Alimentation du tambour du fabricant « Andritz Gouda » à une vitesse de rotation de 4tr/min au démarrage et dont les cylindres sont chauffés vers 90°C par de la vapeur d'eau à 8.1 bars. Une feuille d'amidon solide est ainsi obtenue. Une tuyère est également utilisée pour chauffer le lait d'amidons vers 114°C .
- Des bourbiers réguliers sont obtenus sans augmentation de vitesse de rotation.
- Obtention d'une fine feuille homogène à la sortie du tambour sécheur.
- La feuille est ensuite broyée dans un broyeur à marteau du fabricant « Retsch » équipé d'une grille de 5 mm, à 1 500 tour/min, puis dans un broyeur ultra-fine de marque « Septu » réglé à 50 Hertz, à une vitesse de rotation de 3000 tour/min. Il en résulte une fine poudre jaunâtre. Le diamètre moyen en volume de cette poudre est de 52 µm.

Résultats : Tableau XI

| Exp | Humidité % | pH à 3%MS | Conductivité à 3% uS | RVA | | | | Solubilité % |
|---|---|---|---|---|---|---|---|---|
| | | | | V pic (mPa.s) | V24min (mPa.s) | Vmini (mPa.s) | T°C au Pic | |
| C-1 TS | 4.1 | 5.08 | 85 | 392 | 203 | 195 | 90 | 27.4 |

Discussion des résultats :

Si l'on compare cette famille C de mélanges d'amidons thermiquement modifiés et prégélatinisés à l'exemple 1, 2 (Famille A) et 3 (Famille B) on remarque que la température au Pic (RVA MCL107F) est bien plus élevée pour la famille C que pour le mélange uniquement prégélatinise et également plus élevé que la famille A et la famille B. Ceci traduit bien un niveau de résistance améliorée de la famille C par rapport à la famille B, la famille A et par rapport au mélange natif prégélatinisé : il est nécessaire d'atteindre une température plus importante pour gonfler complètement le mélange d'amidon. Mais ceci se traduit aussi au niveau de la solubilité qui se retrouve alors encore un peu diminuée.

**Exemple 5 : préparation d'un amidon de maïs waxy W thermiquement modifié en turbosécheur continu VOMM suivi d'une prégélatinisation sur tambour sécheur.**

*1) L'alcalinisation de l'amidon de maïs waxy est conduite selon les étapes suivantes :*

- Préparer une suspension aqueuse d'amidon de maïs waxy à 36,5 % en poids de matière sèche (MS)
- Préparer une solution de carbonate de sodium à 30% de concentration massique et chauffer vers 40-50°C pour favoriser la dissolution du carbonate ;
- Ajouter la solution de carbonate de sodium à une concentration massique de 30 % de manière à obtenir une conductivité sur le lait comprise entre 4 et 7 mS/cm;
- Assurer un temps de contact de 0,5
- Filtrer et sécher à une humidité d'équilibre de l'amidon entre 10-14 %

*2) Traitement thermique.*

Le produit ainsi obtenu est traité thermiquement dans des turbosécheurs continus de type VOMM en série, dont la température de consigne est fixée à 210°C et configurés pour faire subir au produit un temps de séjour de 35 min, et de manière à ce que la différence de température entre la consigne et la température du produit en sortie du réacteur, qu'on appelle Delta T, soit d'une valeur de l'ordre de 17 à 20 °C.

Paramètres de process : Tableau XII

| Exp | Conductivité sur produit après imprégnation remis à 20%MS en mS/cm | Humidité du produit avant traitement thermique | Delta T | T°C consigne | Temps de séjour min |
|---|---|---|---|---|---|
| W | 1 | 11.8 | 18 | 210 | 35 |

Les mesures de viscosité RVA sont réalisées et sont présentées dans le tableau ci-dessous.

Résultats : Tableau XIII

| Exp | RVA Chute (mPa.s) | RVA Pic (mPa.s) |
|---|---|---|
| W | -150 | 230 |

*3) Neutralisation et lavage*

- Remise en suspension aqueuse du mélange traité thermiquement à 36.5 % de matière sèche.
- Neutralisation avec de l'acide chlorhydrique dilué à 18 % pour obtenir un pH entre 5 et 7,5.
- Essorage et lavage à l'eau déminéralisée sur une essoreuse « Dorr Oliver » jusqu'à obtention d'une conductivité inférieure à 250 µS.
- Le gâteau ainsi obtenu a une humidité entre 45 et 50 %.

*4) Prégélatinisation sur tambour sécheur*

- Remise en suspension du gâteau à 30% MS dans l'eau
- Alimentation du tambour du fabricant « Andritz Gouda » à une vitesse de rotation de 5tr/min au démarrage et dont les cylindres sont chauffés vers 90°C par de la vapeur d'eau à 8bars. Une feuille d'amidon solide est ainsi obtenue. Une tuyère est également utilisée pour chauffer le lait d'amidon vers 110°C .

- Des bourbiers réguliers sont obtenus sans augmentation de vitesse de rotation.
- Obtention d'une fine feuille homogène à la sortie du tambour sécheur.
- La feuille est ensuite broyée dans un broyeur à marteau du fabricant « Retsch » équipé d'une grille de 2 mm, à 1 500 tour/min, puis dans un broyeur ultra-fine de marque « Septu » réglé à 50 Hertz, à une vitesse de rotation de 3000 tour/min. Il en résulte une fine poudre jaunâtre. Le diamètre moyen en volume de cette poudre est de 45 µm.

Résultats : Tableau XIV

| exp | Humidité % | pH à 3%MS | Conductivité à 3% uS | RVA | | | | Solubilité % |
|---|---|---|---|---|---|---|---|---|
| | | | | V pic (mPa.s) | V24min (mPa.s) | Vmini (mPa.s) | T°C au Pic | |
| W-1 TS | 5.4 | 5.6 | 171 | 386 | 141 | 129 | 84.55 | 16.5 |

Discussion des résultats :

Si l'on compare cet amidon de maïs waxy thermiquement modifié et prégélatinisé à son équivalent en mélange (Famille B- 35min de temps de séjour), il est possible de remarquer que la résistance semble équivalente (température au pic vers 84°C versus 88°C pour les mélanges) mais la solubilité supérieure pour les mélanges et est donc améliorée.

**Exemple 6** : **préparation d'une fécule de pomme de terre F thermiquement modifié en turbosécheur continu VOMM suivi d'une prégélatinisation sur tambour sécheur**

*1) L'alcalinisation de la fécule de pomme de terre est conduite selon les étapes suivantes :*

- Préparer une suspension aqueuse de fécule de pomme de terre à 36,5% en poids de matière sèche (MS)
- Préparer une solution aqueuse de carbonate de sodium à 30% de concentration massique et chauffer vers 40-50°C pour favoriser la dissolution du carbonate;
- Ajouter la solution de carbonate de sodium de manière à obtenir une conductivité sur le lait comprise entre 4 et 6 mS/cm;
- Assurer un temps de contact de 0,5h;
- Filtrer et sécher à une humidité d'équilibre de la fécule entre 12-18%

*2) Traitement thermique*

Le produit ainsi obtenu est traité thermiquement dans des turbosécheurs continus de type VOMM en série, dont la température de consigne est fixée à 210°C et configurés pour faire subir au produit un temps de séjour de 45 min, et de manière à ce que la différence de température entre la consigne et la température du produit en sortie du réacteur, qu'on appelle Delta T, soit d'une valeur de l'ordre de 20 à 23 °C.

Paramètres de process : Tableau XV

| Exp | Conductivité sur produit après imprégnation remis à 20%MS en mS/cm | Humidité du produit avant traitement thermique | Delta T | T°C consigne | Temps de séjour min |
|---|---|---|---|---|---|
| F | 0.96 | 12 | 22.5 | 210 | 45 |

Les mesures de viscosité RVA sont réalisées et sont présentées dans le tableau ci-dessous.

Résultats : Tableau XVI

| Exp | RVA Chute (mPa.s) | RVA Pic (mPa.s) |
|---|---|---|
| F | -415 | 178 |

*3) Neutralisation et lavage*

- Remise en suspension aqueuse du mélange traité thermiquement à 36.5 % de matière sèche.
- Neutralisation avec de l'acide chlorhydrique dilué à 18 % pour obtenir un pH entre 5 et 7,5.
- Essorage et lavage à l'eau déminéralisée sur une essoreuse « Dorr Oliver » jusqu'à obtention d'une conductivité inférieure à 250 μS.
- Le gâteau ainsi obtenu a une humidité entre 45 et 50 %.

*4) Prégélatinisation sur tambour sécheur*

- Remise en suspension aqueuse du gâteau à 30%MS
- Alimentation du tambour du fabricant « Andritz Gouda » à une vitesse de rotation de 4tr/min au démarrage et dont les cylindres sont chauffés vers 90°C par de la vapeur d'eau à 8bars. Une feuille d'amidon solide est ainsi obtenue. Une tuyère est également utilisée pour chauffer lait d'amidon vers 110°C .
- Des bourbiers réguliers sont obtenus sans augmentation de vitesse de rotation.
- Obtention d'une feuille homogène à la sortie du tambour sécheur.
- La feuille est ensuite broyée dans un broyeur à marteau du fabricant « Retsch » équipé d'une grille de 5 mm, à 1 500 tour/min, puis dans un broyeur ultra-fine de marque « Septu » réglé à 50 Hertz, à une vitesse de rotation de 3000 tour/min. Il en résulte une fine poudre jaunâtre. Le diamètre moyen en volume de cette poudre est de 55 μm.

Résultats : Tableau XVII

| exp | Humidité % | pH à 3%MS | Conductivité à 3% uS | RVA | | | | Solubilité % |
|---|---|---|---|---|---|---|---|---|
| | | | | V pic (mPa.s) | V24min (mPa.s) | Vmini (mPa.s) | T°C au Pic | |
| F-1 TS | 4.63 | 7.35 | 130 | 292 | 161 | 161 | 71.9 | 33.6 |

Discussion des résultats :

Si l'on compare cette fécule de pomme de terre thermiquement modifiée et prégélatinisée à son équivalent en mélange (Famille C- 45min de temps de séjour), on remarque que la résistance est inférieure (température au pic vers 72°C versus 90°C pour le mélange) mais la solubilité est légèrement supérieure donc améliorée. Ainsi nous pouvons constater une synergie toute particulière des mélanges par rapport aux natifs et par rapport aux amidons seuls prégélatinisés : la résistance et la solubilité sont améliorée.

**Exemple 7 : Comparaison avec des amidons chimiquement modifiés et prégélatinisés et discussion des résultats**

Les produits tests sont des prégels d'amidons modifiés commercialisés par la société Demanderesse sous le nom de marque générique PREGEFLO®.

Les produits testés sont les suivants :

| exp | Humidité % | | RVA | | | | Solubilité |
|---|---|---|---|---|---|---|---|
| | | pH à 3% MS | V pic (mPa.s) | V24min (mPa.s) | Vmini (mPa.s) | T°C au Pic | |
| PREGEFLOO CH10 | 8 | 6 | 1827 | 531 | 575 | 68.25 | 7 |
| PREGEFLOO CH20 | 5.31 | 5.5 | 1374 | 924 | 923 | 89.6 | 3.8 |
| PREGEFLOO CH30 | 5.96 | 5.7 | 1065 | 777 | 776 | 87.7 | 1.8 |
| PREGEFLOO CH40 | 7.25 | 5.6 | 921 | 592 | 581 | 80.7 | 2.7 |

Discussion : Chaque amidon et mélange d'amidons thermiquement modifié selon l'invention présente une stabilité améliorée durant le process d'utilisation par rapport à l'amidon natif ou le mélange d'amidon natif: moins de phénomène de prise en viscosité et de rétrogradation sont observés lors de l'utilisation de ces amidons.

Donc les mélanges d'amidons thermiquement modifiés C représentent les produits avec une résistance améliorée aux cisaillements, à l'acidité des milieux et aux traitements thermiques.

Les mélanges d'amidons thermiquement modifiés B sont un peu moins résistants que les mélanges d'amidons thermiquement modifiés C et les mélanges d'amidons thermiquement modifiés A le sont un peu moins que les mélanges d'amidons thermiquement modifiés B.

Le choix d'utilisation de ces mélanges d'amidons se fera en fonction de l'application visée et donc des conditions de cisaillement, d'acidité et de température de mise en œuvre.

On remarque ainsi que l'intérêt de mélanger deux amidons et notamment la fécule de pomme de terre et l'amidon de maïs waxy permet d'améliorer la solubilité du mélange par rapport à l'amidon de maïs waxy seul mais également par rapport aux prégels chimiquement modifiés, tout en maintenant le niveau de résistance équivalent voire supérieur à l'amidon de maïs waxy seul et aux amidons chimiquement modifiés.

**Exemple 8 : préparation d'un amidon de maïs waxy thermiquement modifié en étuve ventilée suivi d'une prégélatinisation sur tambour sécheur.**

L'alcalinisation de l'amidon de maïs waxy est conduite selon les étapes suivantes :

- Préparer une suspension d'amidon de maïs waxy à 36,5% en poids de matière sèche (MS)
- Préparer une solution de carbonate de sodium à 30% de concentration massique et chauffer vers 40-50°C pour favoriser la dissolution du carbonate ;
- Ajouter la solution de carbonate de sodium à une concentration massique de 30 % de manière à obtenir une conductivité sur le lait comprise entre 4 et 7 mS/cm;

- Assurer un temps de contact de 0,5
- Filtrer et sécher à une humidité d'équilibre de l'amidon entre 10-14%.

Traitement thermique.

Matériel utilisé :

- Etuve ventilée MEMMERT.
- Coupelle en aluminium pour METTLER LJ16 (Balance mesure d'humidité).
- Balance.

Mode opératoire :

- Peser ~ 40 g par coupelle en aluminium de la base Amidons à tester.
- Mettre les coupelles dans l'étuve MEMMERT préalablement réglée à 170°C.
- Déclencher le chronomètre dès la fin d'introduction des coupelles dans l'étuve.
- Puis sortir de l'étuve les coupelles après 1h de traitement thermique

Paramètres de procédé

| Exp | Conductivité sur produit après imprégnation remis à 20%MS en mS/cm | Humidité du produit avant traitement thermique | T°C consigne | Temps de séjour min |
|---|---|---|---|---|
| W-2 | 1 | 11.8% | 170 | 60 |

Les mesures de viscosité RVA sont réalisées et sont présentées dans le tableau ci-dessous.

Résultats

| Exp | RVA Chute (mPa.s) | RVA Pic (mPa.s) |
|---|---|---|
| W-2 | -110 | 265 |

Neutralisation et lavage

- Remise en suspension de l'amidon de maïs waxy traité thermiquement à 36.5% de matière sèche.
- Neutralisation avec de l'acide chlorhydrique 1N pour obtenir un pH entre 5 et 7.5.
- Filtration et lavage par percolation à l'eau déminéralisée sur un fritté de porosité 3 jusqu'à obtention d'une conductivité inférieure à 250 µS.

- Le gâteau ainsi obtenu a une humidité entre 45 et 50 %.

Pregelatinisation sur tambour sécheur

- Remise en suspension du gâteau à 27,5% MS (matière sèche)
- Alimentation du tambour du fabricant «*Simon Dryer*» à une vitesse de rotation de 8tr/min au démarrage et dont le cylindre principal est chauffé par de la vapeur d'eau à 7Bars. Une feuille d'amidon solide est ainsi obtenue.
- Des bourbiers réguliers sont obtenus sans augmentation de vitesse de rotation.
- Obtention d'une fine feuille homogène à la sortie du tambour sécheur.
- La feuille est ensuite broyée grossièrement au broyeur Thermomix 3300 Vorweck puis tamisé sur une grille de 100 µm. Il en résulte une fine poudre jaunâtre.

Résultats

| ex p | Humidité % | pH à 3%M S | Conductivi té à 3% µS | RVA MCL107B | | | | Solubilit é MCL090 A |
|---|---|---|---|---|---|---|---|---|
| | | | | V pic (mPa. s) | V24mi n (mPa. s) | Vmini (mPa. s) | T°C au Pic | |
| w-2 TS | 6.62 | 5.5 | 43 | 718 | 470 | 498 | 85.8 5 | 15% |

Discussion des résultats :
Un produit similaire est obtenu à celui de l'exemple 5 en termes de température au pic (résistance) et solubilité mais avec une viscosité supérieure.

**Exemple 9 : préparation d'une fécule de pomme de terre thermiquement modifié en étuve ventilée suivi d'une prégélatinisation sur tambour sécheur**

L'alcalinisation de la fécule de pomme de terre est conduite selon les étapes suivantes :

- Préparer une suspension de fécule de pomme de terre à 36,5% en poids dematière sèche (MS)
- Préparer une solution de carbonate de sodium à 30% de concentration massique et chauffer vers 40-50°C pour favoriser la dissolution du carbonate
- Ajouter la solution de carbonate de sodium de manière à obtenir une conductivité sur le lait comprise entre 4 et 6 mS/cm;
- Assurer un temps de contact de 0,5h ;
- Filtrer et sécher à une humidité d'équilibre de la fécule entre 12-18%

Traitement thermique.

Matériel utilisé :

- Etuve ventilée MEMMERT.
- Coupelle en aluminium pour METTLER LJ16 (Balance mesure d'humidité).
- Balance.

Mode opératoire :

- Peser ~ 40 g par coupelle en aluminium de la base Amidons à tester.
- Mettre les coupelles dans l'étuve MEMMERT préalablement réglée à 170°C.
- Déclencher le chronomètre dès la fin d'introduction des coupelles dans l'étuve.
- Puis sortir de l'étuve les coupelles après 1h de traitement thermique

Paramètres de procédé

| Exp | Conductivité sur produit après imprégnation remis à 20%MS en mS/cm | Humidité du produit avant traitement thermique | T°C consigne | Temps de séjour min |
|---|---|---|---|---|
| F-2 | 0.92 | 13,74 | 170 | 60 |

Les mesures de viscosité RVA sont réalisées et sont présentées dans le tableau ci-dessous.

Résultats

| Exp | RVA Chute (mPa.s) | RVA Pic (mPa.s) |
|---|---|---|
| Base fécule de pomme de terre | 355 | 720 |
| F-2 | 206 | 1371 |

Neutralisation et lavage

- Remise en suspension de la fécule de pomme de terre traité thermiquement à 30% de matière sèche.
- Neutralisation avec de l'acide chlorhydrique 1N pour obtenir un pH entre 5 et 7.5.
- Filtration et lavage par percolation à l'eau déminéralisée sur un fritté de porosité 3 jusqu'à obtention d'une conductivité inférieure à 250 μS.
- Le gâteau ainsi obtenu a une humidité entre 45 et 50%

Pregelatinisation sur tambour sécheur

- Remise en suspension du gâteau à 27.5%MS
- Alimentation du tambour du fabricant « Simon Dryer » à une vitesse de rotation d'ajuster de 8 à 6 tr/min au démarrage et dont le cylindre principal est chauffé par de la vapeur d'eau à 7bars. Une feuille d'amidon solide est ainsi obtenue.
- Des bourbiers réguliers sont obtenus après diminution de la de vitesse de rotation.
- Obtention d'une feuille homogène à la sortie du tambour sécheur.

- La feuille est ensuite broyée grossièrement au broyeur Thermomix 3300 Vorweck puis tamisé sur une grille de 100 μm. Il en résulte une fine poudre jaunâtre.

Résultats

| ex p | Humidité % | pH à 3%MS | Conductivité à 3% uS | RVA MCL107B | | | | Solubilité MCL090A |
|---|---|---|---|---|---|---|---|---|
| | | | | V pic (mPa. s) | V24mi n (mPa. s) | Vmini (mPa. s) | T° C au Pic | |
| F-2 TS | 5.81 | 5.82 | 32 | 534 | 343 | 262 | 73 | 34.9% |

Discussion des résultats :

Un produit similaire est obtenu à celui qui est exemplifié à l'exemple 6 en termes de température au pic (résistance) et solubilité mais avec une viscosité supérieure notamment au démarrage. Après éclatement de la part non soluble nous retrouvons une viscosité proche de l'exemple 6 (161 mPa.s Vmini de l'exemple 6 pour 262 mPa.s dans cet exemple).

**Exemple 10 : préparation d'un mélange d'amidons thermiquement modifié en étuve ventilée suivi d'une prégélatinisation sur tambour sécheur**

L'alcalinisation du mélange d'amidons est conduite selon les étapes suivantes :

- Préparer une suspension 50/50 en %poids d'amidon de maïs waxy et de fécule de pomme de terre à 36.5% de matière sèche (MS) ;
- Préparer une solution de carbonate de sodium à 30% de concentration massique et chauffer vers 40-50°C pour favoriser la dissolution du carbonate
- Ajouter la solution de carbonate de sodium de manière à obtenir une conductivité sur le lait comprise entre 4 et 6 mS/cm;
- Assurer un temps de contact de 0,5h ;
- Filtrer et sécher à une humidité d'équilibre de la fécule entre 12-18%

Traitement thermique.

Matériel utilisé :

- Etuve ventilée MEMMERT.
- Coupelle en aluminium pour METTLER LJ16 (Balance mesure d'humidité).
- Balance.

Mode opératoire :

- Peser ~ 40 g par coupelle en aluminium de la base Amidons à tester.

- Mettre les coupelles dans l'étuve MEMMERT préalablement réglée à 170°C.
- Déclencher le chronomètre dès la fin d'introduction des coupelles dans l'étuve.
- Puis sortir de l'étuve les coupelles après 1h de traitement thermique

Paramètres de procédé

| Exp | Conductivité sur produit après imprégnation remis à 20%MS en mS/cm | Humidité du produit avant traitement thermique | T°C consigne | Temps de séjour min |
|---|---|---|---|---|
| M-1 | 1.23 | 11.83 | 170 | 60 |

Les mesures de viscosité RVA sont réalisées et sont présentées dans le tableau ci-dessous.

Résultats

| Exp | RVA Chute (mPa.s) | RVA Pic (mPa.s) |
|---|---|---|
| Base 50/50 maïs waxy / fécule de pomme de terre | 800 | 1023 |
| M-1 | -281 | 582 |

Neutralisation et lavage

- Remise en suspension du mélange traité thermiquement à 30% de matière sèche.
- Neutralisation avec de l'acide chlorhydrique 1N dilué à 18% pour obtenir un pH entre 5 et 7.5.
- Filtration et lavage par percolation à l'eau déminéralisée sur un fritté de porosité XX jusqu'à obtention d'une conductivité inférieure à 250 µS.
- Le gâteau ainsi obtenu a une humidité entre 45 et 50%

Pregelatinisation sur tambour sécheur

- Remise en suspension du gâteau à 27.5%MS
- Alimentation du tambour du fabricant « Simon Dryer » à une vitesse de rotation de 5tr/min au démarrage et dont le cylindre principal est chauffé par de la vapeur d'eau à 7bars. Une feuille d'amidon solide est ainsi obtenue.
- Des bourbiers réguliers sont obtenus sans augmentation de vitesse de rotation.
- Obtention d'une feuille homogène à la sortie du tambour sécheur.
- La feuille est ensuite broyée grossièrement au broyeur Thermomix 3300 Vorweck basic puis tamisé sur une grille de 100 µm. Il en résulte une fine poudre jaunâtre.

Résultats

| ex p | Humidité % | pH à 3%M S | Conductivi té à 3% uS | RVA MCL107B | | | | Solubilit é MCL090 A |
|---|---|---|---|---|---|---|---|---|
| | | | | V pic (mPa. s) | V24mi n(mPa. s) | Vmini (mPa. s) | T° C au Pic | |
| M-1 TS | 5.44 | 5.55 | 28 | 515 | 357 | 354 | 76 | |

Discussion des résultats

Un produit est ainsi obtenu, qui, au démarrage développe sa viscosité de façon similaire à l'amidon de maïs waxy seul prégélatinisé W-2 mais qui ensuite se rapproche de la fécule seule prégélatinisé F-2 en ayant une température au pic similaire.

**Exemple 11** : **Comparaison des résultats de l'exemple 10 et du mélange des produits issus de l'exemple 8 et 9**

| exp | Humidité % | pH à 3%M S | Conductiv ité à 3% µS | RVA MCL107B | | | | Solubilit é MCL09 0A |
|---|---|---|---|---|---|---|---|---|
| | | | | V pic (mPa. s) | V24mi n (mPa. s) | Vmini (mPa. s) | T° C au Pic | |
| A-2 TS | 5.44 | 5.55 | 28 | 515 | 357 | 354 | 76 | 19 |
| Mélan ge 50/50 du produit W-2 TS et F-2 TS | 6,20 | 5,63 | 33 | 574 | 343 | 357 | 81 | 23 |

Discussion des résultats :

Selon que le mélange soit fait au tout début du procédé comme revendiqué dans cette invention ou après ayant subi les différents procédés de traitement thermique et prégélatinisation séparément, les mêmes produits ne sont pas obtenus car la température au pic est significativement différente ce qui signifie un niveau de résistance différent et la solubilité est également différente. De plus réaliser le mélange en amont permettra d'assurer une homogénéité parfaite notamment via un traitement thermique identique et une prégélatinisation dans les mêmes conditions. La taille des particules du prégel ainsi obtenu sera également similaire n'entrainant pas de ségrégation au cours du temps.

## Revendications

**1.** Procédé de préparation d'un mélange gélatinisé d'au moins deux amidons modifiés thermiquement, dans lequel les amidons sont des amidons d'origines botaniques distinctes, qui comprend les étapes consistant à :

1. Préparer un lait d'amidon contenant au moins deux amidons d'origines botaniques distinctes,
2. Traiter le lait ainsi obtenu en conditions alcalines puis déshydratation et traitement thermique pendant un temps et à une température permettant d'obtenir un mélange d'amidons thermiquement modifiés,
3. Prégélatiniser ledit mélange en utilisant un procédé qui provoque une rupture de la structure granulaire des amidons.

**2.** Procédé selon la revendication 1, **caractérisé en ce que** les deux premières étapes seront réalisées de la façon suivante :

(i) Préparer un lait d'amidon contenant au moins deux amidons d'origines botaniques distinctes, présentant une matière sèche totale comprise entre 30 et 40 %, de préférence entre 35 et 37 % en poids,
(ii) Ajouter un agent alcalin de manière à obtenir une conductivité finale sur la poudre remise en suspension à 20 % de matière sèche entre 0,5 et 5 mS/cm,
(iii) Assurer un temps de contact compris entre 0,5 et 5 heures,
(iv) Filtrer et sécher le lait d'amidon jusqu'à une humidité comprise entre 10,5 à 15 %, de manière à obtenir une poudre d'amidons présentant une conductivité entre 0,5 et 2,5 mS/cm et un pH compris entre 9 et 10,5,
(v) Chauffer ladite poudre d'amidons séchés de manière à la porter à une température de plus de 130°C de préférence entre 130 et 220°C, pendant un temps de séjour compris entre 10 minutes et 6 heures.

**3.** Procédé selon l'une ou l'autre des revendications 1 et 2, **caractérisé en ce que** l'étape 3) est réalisée par traitement de type gélatinisation hydrothermique, notamment par cuisson à la vapeur, cuisson au cuiseur à jet, cuisson au tambour ou cuisson au pétrin, à une température inférieure à la température de gélatinisation des amidons correspondants, puis séchage sur un tambour sécheur ou dans une extrudeuse.

**4.** Procédé selon l'une quelconque des revendications 1 à 3, **caractérisé en ce que** l' étape 3) comprend les étapes consistant en :

(i) Remettre en suspension le mélange d'amidons modifiés thermiquement à une matière sèche comprise entre 25 et 35 %, de préférence de 30 % en poids,
(ii) Alimenter un tambour sécheur et chauffer le lait d'amidons à une température comprise entre 100 à 120°C, de préférence entre 108 à 110°C,
(iii) broyer la feuille obtenue de manière à obtenir une poudre présentant une granulométrie moyenne comprise entre 50 et 60 $\mu$m.

**5.** Mélange gélatinisé d'au moins deux amidons modifiés thermiquement, dans lequel les amidons sont des amidons d'origines botaniques distinctes, ledit mélange étant susceptible d'être obtenu par un procédé de fabrication selon l'une quelconque des revendications précédentes.

**6.** Utilisation d'un mélange gélatinisé d'au moins deux amidons modifiés thermiquement selon la revendication 5 ou d'un mélange préparé par le procédé selon l'une quelconque des revendications 1 à 4, en tant qu'agents épaississants et texturants dans des applications alimentaires, principalement dans les soupes instantanées, sauces, vinaigrettes, desserts, produits laitiers et les préparations pour boulangerie.

## Patentansprüche

**1.** Verfahren zur Herstellung einer gelatinierten Mischung aus wenigstens zwei thermisch modifizierten Stärken, wobei die Stärken Stärken unterschiedlicher botanischer Herkunft sind, umfassend die folgenden Schritte:

1. Herstellung einer Stärkemilch, die wenigstens zwei Stärken unterschiedlicher botanischer Herkunft umfasst,
2. Behandlung der so erhaltenen Milch unter alkalischen Bedingungen, dann Dehydratisierung und Wärmebehandlung während eines Zeitraums und bei einer Temperatur, die eine thermisch modifizierte Stärkemischung ergibt,
3. Vorgelatinieren der genannten Mischung unter Verwendung eines Verfahrens, das ein Aufbrechen der Kornstruktur der Stärken bewirkt.

**2.** Verfahren nach Anspruch 1, **dadurch gekennzeichnet, dass** die ersten beiden Schritte wie folgt durchgeführt werden:

(i) Herstellung einer Stärkemilch, die wenigstens zwei Stärken unterschiedlicher botanischer Herkunft umfasst und eine Gesamttrockenmasse zwischen 30 und 40 Gew.-%, bevorzugt zwischen 35 und 37 Gew.-%, aufweist,
(ii) Zugabe eines alkalischen Mittels, so dass eine Endleitfähigkeit mit dem resuspendierten Pulver bei 20 % Trockenmasse zwischen 0,5 und 5 mS/cm erreicht wird,
(iii) Gewährleisten einer Kontaktzeit zwischen 0,5 und 5 Stunden,
(iv) Filtrieren und Trocknen der Stärkemilch bis zu einer Feuchtigkeit zwischen 10,5 und 15 %, um ein Stärkepulver mit einer Leitfähigkeit zwischen 0,5 und 2,5 mS/cm und einem pH-Wert zwischen 9 und 10,5 zu erhalten,
(v) Erhitzen des getrockneten Stärkepulvers, um es für eine Verweilzeit zwischen 10 Minuten und 6 Stunden auf eine Temperatur von mehr als 130 °C, bevorzugt zwischen 130 und 220 °C, zu bringen.

3. Verfahren nach einem der Ansprüche 1 oder 2, **dadurch gekennzeichnet, dass** Schritt 3) durch eine Behandlung vom Typ hydrothermische Gelatinierung durchgeführt wird, insbesondere durch Dampfkochen, Kochen im Düsenkocher, Trommelkochen oder Knetkochen bei einer Temperatur unterhalb der Gelatinierungstemperatur der entsprechenden Stärken und anschließendes Trocknen auf einer Trockentrommel oder in einem Extruder.

4. Verfahren nach einem der Ansprüche 1 bis 3, **dadurch gekennzeichnet, dass** Schritt 3) die folgenden Schritte umfasst:

   (i) Resuspendieren der thermisch modifizierten Stärkemischung auf eine Trockenmasse zwischen 25 und 35 Gew.-%, bevorzugt 30 Gew.-%,
   (ii) Beschicken einer Trockentrommel und Erhitzen der Stärkemilch auf eine Temperatur zwischen 100 und 120 °C, bevorzugt zwischen 108 und 110 °C,
   (iii) Mahlen des erhaltenen Blattes, um ein Pulver mit einer mittleren Teilchengröße zwischen 50 und 60 μm zu erhalten.

5. Gelatinierte Mischung aus wenigstens zwei thermisch modifizierten Stärken, wobei die Stärken Stärken unterschiedlicher botanischer Herkunft sind, wobei die Mischung durch ein Herstellungsverfahren nach einem der vorhergehenden Ansprüche erhältlich ist.

6. Verwendung einer gelatinierten Mischung aus wenigstens zwei thermisch modifizierten Stärken nach Anspruch 5 oder einer Mischung, die durch das Verfahren nach einem der Ansprüche 1 bis 4 hergestellt wurde, als Verdickungs- und Texturierungsmittel in Lebensmittelanwendungen, hauptsächlich in Instantsuppen, Saucen, Salatdressings, Desserts, Milchprodukten und Backmischungen.

## Claims

1. A method for preparing a gelatinized blend of at least two heat-modified starches, wherein the starches are starches of distinct botanical origins, which comprises the steps consisting of:

   1. Preparing a starch milk containing at least two starches of distinct botanical origins,
   2. Treating the milk thus obtained under alkaline conditions and then dehydration and heat treatment for a time and at a temperature making it possible to obtain a blend of heat-modified starches,
   3. Pregelatinizing said blend using a method that causes a break in the granular structure of the starches.

2. The method according to claim 1, **characterized in that** the first two steps will be carried out as follows:

   (i) preparing a starch milk containing at least two starches of different botanical origins, having total dry matter content comprised between 30 and 40%, and preferably between 35 and 37% by weight,
   (ii) adding an alkaline agent so as to obtain a final conductivity of the powder resuspended to 20% dry matter content of between 0.5 and 5 mS/cm,
   (iii) ensuring a contact time comprised between 0.5 and 5 hours,
   (iv) filtering and drying the starch milk to a moisture content comprised between 10.5 and 15%, so as to obtain a starch powder having a conductivity of between 0.5 and 2.5 mS/cm and a pH comprised between 9 and 10.5,
   (v) heating the dried starch powder so as to bring it to a temperature higher than 130 °C, preferably between 130 and 220 °C, for a residence time comprised between 10 minutes and 6 hours.

3. The method according to either of claims 1 and 2, **characterized in that** step 3) is carried out by hydrothermal gelatinization-type treatment, in particular by steam cooking, jet-cooking, drum baking or kneading-machine baking, at a temperature below the gelatinization temperature of the corresponding starches, then drying on a drying drum or in an extruder.

4. The method according to any one of claims 1 to 3, **characterized in that** step 3) comprises the steps consisting of:

   (i) Suspending the heat-modified starch blend with a dry matter of between 25 and 35%, preferably 30% by weight,
   (ii) Feeding a drying drum and heating the starch milk to a temperature between 100 and 120°C, preferably between 108 to 110°C,

(iii) Crushing the sheet obtained so as to obtain a powder having an average particle size of between 50 and 60 μm.

5. A gelatinized blend of at least two heat-modified starches, wherein the starches are starches of distinct botanical origins, said blend being capable of being obtained by a manufacturing method according to any one of the preceding claims.

6. Use of a gelatinized blend of at least two heat-modified starches according to claim 5 or of a blend prepared by the method according to any one of claims 1 to 4, as thickeners and texturizing agents in food applications, mainly in instant soups, sauces, vinaigrettes, desserts, dairy products, and baking supplies.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6221420 B
- US 20010017133 A
- WO 2014042537 A
- WO 2019122749 A
- EP 1102792 A
- EP 2251358 A
- WO 2020018061 A
- EP 3345932 A
- FR 2007801
- US 6261376 B
- WO 9603891 A1